# EUROPEAN PATENT APPLICATION

(11) **EP 0 658 963 A2**
(43) Date of publication of application: **21.06.1995**
(21) Application number: 94119631.3
(22) Date of filing: 12.12.1994
(51) Int. Cl.: H02B 1/52

(54) **Remote-control transportable power unit**

(30) Priority: 15.12.1993 IT PD930243
(71) Applicant: Bertin, Roberto, I-35026 Conselve Padova) (IT)
(72) Inventor: Bertin, Roberto, I-35026 Conselve Padova) (IT)
(74) Representative: Modiano, Guido, Dr.-Ing.

(57) **Abstract**

The present invention relates to a transportable power unit which comprises at least one motorized wheel which is rigidly coupled to a supporting structure with onboard power sources and electric/electronic remote-control actuation means; the motorized wheel is mounted on a swivelling support which is also motorized for steering. The supporting structure is provided with means for detachable fixing to a wheeled work station or the like.

## Description

The present invention relates to a remote-control transportable power unit for propelling wheeled work stations or the like.

Structures having a platform or work station, such as for example household and industrial folding ladders or scaffolds that rest directly on the ground in a fixed position, are already known and used universally.

Some larger and heavier scaffolds are mounted on a set of wheels allowing the user to easily move them by hand when he is on the ground.

During work these structures must be moved constantly, and this accordingly forces the operators to step down, thus causing waste of time and efforts.

It should also be noted that for tall structures, placement performed from the ground by the operator does not always exactly match the region where he must work.

In order to solve these drawbacks, in a first case, in particular for structures for household use, a power unit and control means have been installed directly on board so as to make the work stations self-propelled.

However, this has caused other problems linked mainly to transportability when not in use, due to the considerable extra weight.

Further problems are due to difficulties in collapsing the structures for storage, due to the presence of the power units.

In other cases, a solution to the problem has been attempted by providing wheeled and motorized bases with couplings in which the scaffolds are appropriately installed.

These bases have a power unit and power storage units but cannot be disassembled without removing the scaffolds that they support; they are also particularly heavy and thus difficult to handle when not in use.

The principal aim of the present invention is to provide a transportable power unit that can propel any type of wheeled work station or the like.

Within the scope of this aim, a consequent primary object is to provide a power unit which can be conveniently disengaged from the work station.

Another important object is to provide a power unit which can be conveniently controlled by the operator on board the work station.

Another important object is to provide a power unit that is particularly suitable even for moving large scaffolds.

Another important object is to provide a power unit which allows to precisely position the work stations or the like at the work areas.

Another object is to provide a power unit that allows considerable time and labor savings to users.

This aim, these objects, and others which will become apparent hereinafter are achieved by a remote-control transportable power unit for propelling wheeled work stations or the like, characterized in that it comprises at least one motorized wheel which is coupled to a supporting structure with onboard power sources and electric/electronic remote-control actuation means, said motorized wheel being mounted on a swivelling support which is also motorized for steering, said supporting structure being provided with means for detachable fixing to a wheeled work station or the like.

Further characteristics and advantages of the invention will become apparent from the detailed description of an embodiment thereof, illustrated only by way of non-limitative example in the accompanying drawings, wherein:

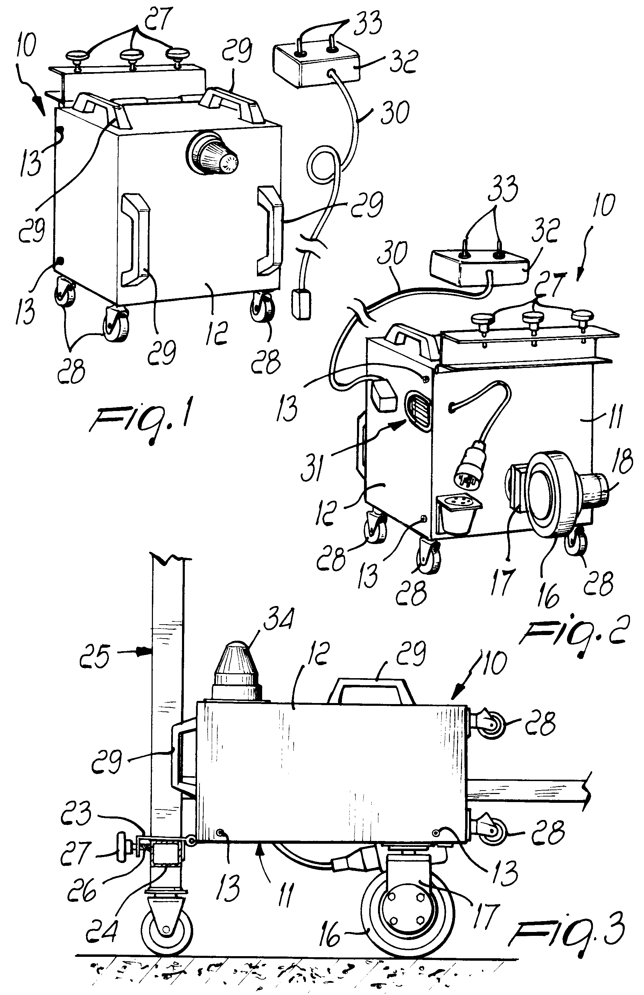

figures 1 and 2 are two perspective views of the power unit in the inactive transport configuration;
figure 3 is a side view of the power unit in the active configuration, fixed to a scaffold;

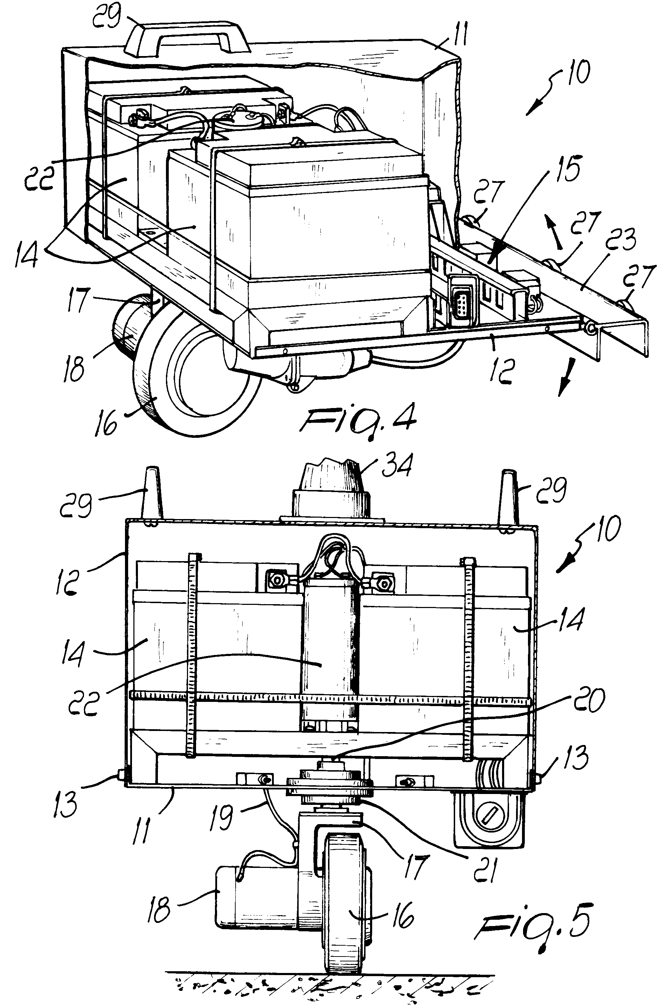

figure 4 is a partially cutout perspective view of the power unit in the active configuration;
figure 5 is a lateral internal view of the power unit.

With reference to the above figures, a transportable power unit according to the invention is generally designated by the reference numeral 10 and comprises a sturdy rectangular metal base 11 which is conveniently closed by a box-like lid 12 which is bolted to said base by means of screws 13; said base has, on board, two electric accumulators 14 and an electric/electronic control board 15.

A wheel 16 is coupled to the base 11 in a downward region and is mounted on a support 17 which also forms the support of a first electric gearmotor 18 which is coupled thereto and appropriately motorizes it.

The first electric gearmotor 18 is of course connected to the board 15 by means of electric cables 19 with appropriate connections.

The support 17 is coupled to a shaft 20, which is rotatably coupled at right angles to the base 11 by means of a support 21 provided with bearings and is connected to a second electric gearmotor 22 which is advantageously arranged between the accumulators 14.

A metal profile 23 shaped like an inverted C is pivoted to the base 11 parallel to the axis of the wheel 16 and is suitable to be arranged astride a cross-member 24 for example of a wheeled scaffold 25 or similar structure.

The profile 23 is fixed to the cross-member 24 by means of screws 26 provided with knobs 27.

The screws 26 pass through one of the wings of the profile 23 and lock the cross-member 24 between their head and the other wing.

Said box-like lid 12 is provided with four castors 28 which are fixed to a surface that lies at right angles to the base 11 and with handles 29 for towing and positioning the unit to fix it to the scaffold 25.

An electric cable 30 connects a control box 32 to the base 15 by means of a connection 31; said box is meant to be placed on the scaffold to perform maneuvers.

The box 32 has appropriate control levers 33, a power-on device which is not shown in the figures and is conveniently key-operated, and a device, also not shown, that acoustically warns about the charge situation of the accumulators 14.

A yellow flashing light 34 is also located on the lid 12 and is activated during maneuvers.

As regards operation, when inactive, the power unit rests on the four castors 18 and can be conveniently towed or lifted by means of the handles 29.

For use, the unit 10 must be turned over so as to rest the wheel 16 on the ground and must then be fixed to the scaffold 25 inside its footprint.

By means of the control box 32, the operator can thus move the scaffold 25 in the appropriate manner.

The accumulators must of course be periodically connected to the electric mains for charging.

In practice it has been observed that the intended aim and objects of the invention have been achieved.

The power unit thus provided is in fact suitable to propel work stations of any kind, such as scaffolds, ladders, simple platforms, etc., so long as they are wheeled.

The power unit is transportable and can be disengaged from the scaffold at all times.

It has onboard electric accumulators that provide it with appropriate endurance in operation.

The invention thus conceived is susceptible of numerous modifications and variations, all of which are within the scope of the inventive concept.

Thus, for example, the accumulators, in addition to being rechargeable, may also be of the removable type with snap-lock contacts, and the C-shaped engagement profile may also be of the vertically adjustable type.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Remote-control transportable power unit for propelling wheeled work stations or the like, characterized in that it comprises at least one motorized wheel which is coupled to a supporting structure with onboard power sources and electric/electronic remote-control actuation means, said motorized wheel being mounted on a swivelling support which is also motorized for steering, said supporting structure being provided with means for detachable fixing to a wheeled work station or the like.

2. Power unit according to claim 1, characterized in that said motorized wheel is mounted on a swivelling support that constitutes the support of an electric gearmotor which is coupled thereto.

3. Power unit according to one or more of the preceding claims, characterized in that said support can swivel since it is coupled to a shaft that is rotatably coupled to said supporting structure, said shaft being connected to an electric gearmotor that drives its rotation for steering.

4. Power unit according to one or more of the preceding claims, characterized in that said supporting structure is constituted by a sturdy metal base that is closed at the top by a box-shaped lid.

5. Power unit according to one or more of the preceding claims, characterized in that said power sources are constituted by at least one electric accumulator.

6. Power unit according to one or more of the preceding claims, characterized in that said electric/electronic actuation means are constituted by an electric/electronic board that is connected to said at least one accumulator, to said motors, and to a control box in a remote position.

7. Power unit according to one or more of the preceding claims, characterized in that said means for detachable fixing to a work station are constituted by a C-shaped profile which is hinged to said supporting structure, said profile being suitable to be arranged astride a cross-member of said wheeled work station or the like and to be fixed by means of screws provided with knobs, said screws passing through a wing of said profile and pushing said cross-member against the other wing.

8. Power unit according to one or more of the preceding claims, characterized in that said structure has castors on one surface that lies at right angles to the surface on which said wheel is mounted.

9. Power unit according to one or more of the preceding claims, characterized in that said structure has grip handles.

10. Power unit according to one or more of the preceding claims, characterized in that said control box has control levers and activation switches.

11. Power unit according to one or more of the preceding claims, characterized in that said structure comprises a flashing yellow light which is activated during movement.

12. Power unit according to one or more of the preceding claims, characterized in that said detachable fixing means can be adjusted vertically.
